Europäisches Patentamt

European Patent Office

Office européen des brevets

(19)

(11) Veröffentlichungsnummer: **0 212 091**
**A1**

# (12) EUROPÄISCHE PATENTANMELDUNG

(21) Anmeldenummer: **86107292.4**

(22) Anmeldetag: **28.05.86**

(51) Int. Cl.⁴: **F 16 C 32/06**, F 16 C 33/14

(30) Priorität: **10.06.85 DE 3520717**

(43) Veröffentlichungstag der Anmeldung: **04.03.87**
**Patentblatt 87/10**

(84) Benannte Vertragsstaaten: **AT BE CH DE FR GB IT LI LU NL SE**

(71) Anmelder: **INTERATOM Gesellschaft mit beschränkter Haftung, Friedrich-Ebert-Strasse, D-5060 Bergisch Gladbach 1 (DE)**

(72) Erfinder: **Maus, Wolfgang, Gut Horst, D-5060 Bergisch Gladbach (DE)**
Erfinder: **Kottmann, Rolf, Dr., Am langen Hahn 49, D-5253 Lindlar (DE)**
Erfinder: **Tittizer Gabriel, Auf dem Rosenberg 19b, D-5064 Rösrath-Hoffnungstal (DE)**

(74) Vertreter: **Mehl, Ernst, Dipl.-Ing. et al, Postfach 22 01 76, D-8000 München 22 (DE)**

(54) **Abgasturbolader mit gasstatischem Lager.**

(57) Für Abgasturbolader von Verbrennungskraftmaschinen, deren Welle (7) in gasstatischen Lagern (8) geführt ist, wird der Einsatz von Lagern vorgeschlagen, deren Schale aus einem porösen Material hergestellt ist, dessen Oberflächenschicht auf der Innenseite der Lagerschale verdichtend ist. Derartige Lager können mit Luft verhältnismäßig niedrigem Drucks betrieben werden, so daß die Lagerluftversorgung unmittelbar durch Abzweigen aus der vom Kompressor (6) verdichteten Luft bewerkstelligt werden kann. Als Puffer und zur Speisung des Lagers in der Anlaufphase wird ein durch den Kompressor aufzuladender Druckluftspeicher (16) vorgeschlagen. Bei Bedarf kann auch eine Hilfspumpe (17) dazugeschaltet werden.

EP 0 212 091 A1

Interatom GmbH

5060 Bergisch Gladbach 1

## Abgasturbolader mit gasstatischem Lager

Die vorliegende Erfindung betrifft einen Abgasturbolader für Verbrennungskraftmaschinen nach dem Oberbegriff des 1. Anspruchs. Derartige Maschinen nutzen die in den Abgasen z. B. eines Otto-Motors enthaltene Restenergie zur Kompression der Ladeluft für den Betrieb eben desselben Motors. Hierdurch lassen sich Leistungssteigerungen und Verbrauchsminderungen erreichen. Das aus Gasturbine und Turbokompressor auf gemeinsamer Welle bestehende Aggregat kann sehr hohe Drehzahlen (bis zu 100.000 $U/min^{-1}$) erreichen was für die Lagerung der Welle besondere Probleme aufwirft. Zur Schmierung und Kühlung des Lagers wird nach dem derzeitigen Stand der Technik Öl verwendet, das in einem Kühlkreislauf umläuft und gegebenenfalls auch mit Wasser rückgekühlt wird. Trotzdem stellt besonders eine anhaltende thermische Belastung einen Begrenzungsfaktor für Belastbarkeit und Lebensdauer der Lager dar, da erhöhte Öltemperaturen zu dessen Verkokung und zum raschen Verschleiß der Lager führen. Auch kann die Abdichtung des Lagers gegen den Austritt von Öl Schwierigkeiten bereiten. Das Ansprechverhalten von Abgasturbolagern, die in Kraftfahrzeugen eingesetzt und demzufolge mit häufig stark wechselnden Drehzahlen betrieben werden, wird in Fachkreisen als noch verbesserungsbedürftig beurteilt. Zu Verzögerungen in der Steigerung der Drehzahl tragen nicht nur die Massenträgheit der bewegten Teile, sondern auch die Lagerreibung bei. Daher ist bereits vorgeschlagen worden, gasstatische Lager zu verwenden.

We/Knl 25.03.86

-2-

Gasstatische Lager weisen einen äußerst geringen Reibungsbeiwert auf und sind vom Standpunkt einer ausreichenden
Kühlung bei hohen Drehzahlen im Grundsatz sehr unproblematisch. Die Verwendung eines gasstatischen Lagers führt
darüber hinaus zu einer erwünschten Verringerung der im
Gehäuse des Abgasturboladers auftretenden thermischen
Gradienten und Transienten. In ihrer üblichen Ausführungsform sind sie jedoch sehr kostspielig, was ihrer Verwendung in serienmäßig gefertigten Maschinen im Wege stand.
Dies ist darauf zurückzuführen, daß man erhöhte Anforderungen an die Rundheit von Lager und Welle stellen muß,
um ein Schwingen der Ersteren zu verhindern.

Auch ist bereits daran gedacht worden, die zur Schmierung
der Lager benötigte Druckluft durch den Abgasturbolader
selbst liefern zu lassen. Der für das Betreiben der Lager
erforderliche hohe Luftdruck kann jedoch nicht direkt
durch diesen erreicht werden, sodaß besondere, durch den
Abgasturbolader indirekt angetriebene Kompressoren erforderlich werden (JP-A-59-93925).

Aufgabe der vorliegenden Erfindung ist ein Abgasturbolader
mit verbesserten gasstatischen Lagern, die ohne Zuhilfenahme zusätzlicher Maschinen unmittelbar aus der durch den
Abgasturbolader verdichteten Luft gespeist werden können,
sowie Ausgestaltungen desselben, die auch die beim Anlaufen
auftretenden Mängel in der Druckluftversorgung ausgleichen.

Die Lösung dieser Aufgabe erfolgt durch die im kennzeichnenden Teil des 1. Anspruchs angegebenen Mittel. In der
DE-A-3 230 232 hat die Anmelderin eine neuartige Lagerschale für ein gasstatisches Lager beschrieben, bei der
neugewonnene Erkenntnisse über die Wirkungsweise der gasstatischen Lager in die Praxis umgesetzt wurden.

Die poröse Lagerschalenschicht wirkt normalerweise als Speicher für das Fluid und die stärker verdichtete Oberflächenschicht dient dabei als Drossel. Dabei fließt Gas mit einem hohen Strömungswiderstand durch die poröse Lagerschale, wodurch sich ein radiales Druckgefälle aufbaut. Da das Druckgefälle proportional der Strömungsgeschwindigkeit ist, sind bei Aufliegen der Welle, d. h. bei geringem Massenstrom die Poren der Lagerschale bis nahe der aufliegenden Welle mit vollem Speisedruck geladen. Beim Abheben der Welle fließt dieses gespeicherte Gas aufgrund des geringen Strömungswiderstandes in den Lagerspalt und verzögert die Abnahme des statischen Druckes. Es hat sich gezeigt, daß Lager dieser Art mit Luft betrieben werden können, die sich auf einem verhältnismäßig niedrigen Druck befindet, wie er durch den Kompressor eines Abgasturboladers erzeugt werden kann. Versuche haben auch gezeigt, daß die Anforderungen an die Rundheit der Bauteile auf dasjenige Maß herabgesetzt werden konnten, die z. B. beim Bau von Verbrennungskraftmaschinen üblich sind.

Dies trifft jedoch nicht während der Anlaufphase zu. Um bereits während dieser eine ausreichende Versorgung des Lagers sicherzustellen, wird die Ausgestaltung der Erfindung gemäß dem 2. Anspruch vorgeschlagen. Die dort geforderte Pumpe kann z. B. aus einem elektrischen Netz gespeist werden und kann durch Druckschalter jedesmal dann in Betrieb gesetzt werden, wenn der Lagerluftdruck unter ein bestimmtes Minimum zu fallen droht.

Kumulativ oder alternativ hierzu kann gemäß der im 3. Anspruch vorgeschlagenen Ausgestaltung der Erfindung als Puffer ein Druckluftspeicher vorhanden sein, der den mit der Drehzahl des Kompressors schwankenden Versorgungsdruck des Lagers vergleichmäßigt.

Die weitere Ausgestaltung der Erfindung gemäß dem 4. Anspruch stellt sicher, daß das Lager nicht durch in der Ansaugluft mitgerissene Partikel beschädigt werden kann.

Ein Ausführungsbeispiel der Erfindung ist in der Zeichnung dargestellt, und zwar zeigt

Figur 1 schematisch die Verschaltung eines Abgasturboladers mit den erforderlichen Hilfsgeräten und

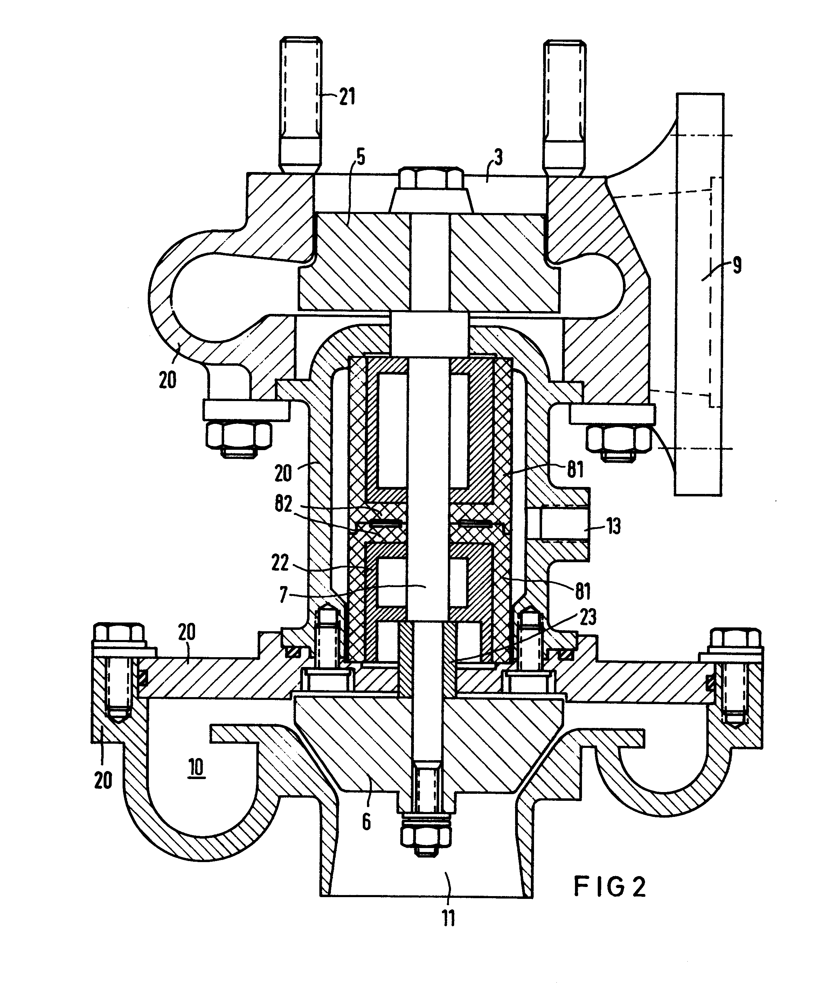

Figur 2 in vergrößertem Maßstab den Abgasturbolader selbst.

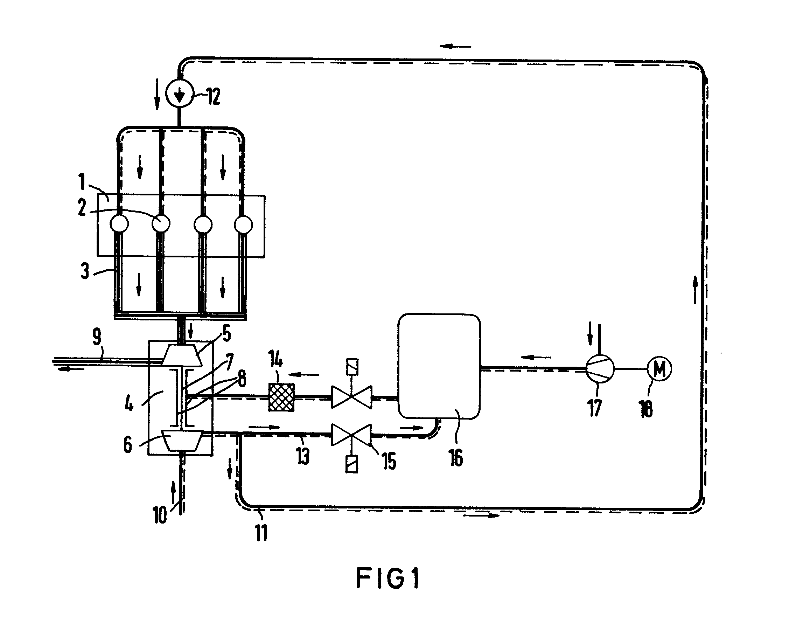

Figur 1 zeigt einen zum Beispiel vierzylindrigen Verbrennungsmotor 1, von dessen Zylindern 2 je eine Abgasleitung 3 ausgeht, die vor Eintritt in den Abgasturbolader 4 zu einem einzigen Strang vereinigt werden. Im Abgasturbolader 4 sind eine Turbine 5 und ein Kompressor 6 auf einer gemeinsamen Welle 7 angeordnet, die in einem gasstatischen Lager 8 gelagert ist. Das aus den Zylindern 2 austretende Abgas treibt die Turbine 5 und wird dann dem Auspuff 9 zugeleitet. Der Turbokompressor 6 saugt über eine Leitung 10 Luft an und komprimiert diese; sie wird dann über eine Leitung 11 einer Einspritzpumpe 12 zugeführt, von der aus dem einzelnen Zylinder das erforderliche Kraftstoffluftgemisch zugeführt wird. Vom Kompressor 6 zweigt eine weitere Leitung 13 ab, durch die die komprimierte Luft - in einem Staubfilter 14 gereinigt - entweder direkt dem gasstatischen Lager 7 zugeführt wird oder aber (wie hier gezeichnet) über ein entsprechendes Druckregelventil 15 gesteuert einem Druckluftspeicher 16. Dieser sorgt für einer Vergleichmäßigung des Lagerluftdruckes und für die Speisung des Lagers in der Anlaufphase, wenn der Kompressor 6 noch keinen ausreichenden Druck liefert. Ist der Speicher leer, so wird eine Hilfspumpe 17 in Betrieb gesetzt, die durch einen Elektromotor 18 mit unabhängiger Stromzufuhr angetrieben wird. (Im Falle eines Kraftfahrzeuges z. B. aus der Bordbatterie).

Das Gehäuse des Abgasturboladers besteht aus Fertigungs- und Montagegründen aus mehreren, miteinander verschraubten

0212091
85 F 8718 E

Einzelteilen 20 und wird mit Bolzen 21 am Motor 1 befestigt. Das Lager 8 ist im dargestellten Beispiel aus zwei Hälften aufgebaut, von denen jede ein Teil 81 aufweist, das als Radiallager wirkt, und ein Teil 82, das die Lagerung in axialer Richtung übernimmt. Bei dem dargestellten Beispiel handelt es sich um die Anpassung eines handelsüblichen Abgasturboladers, der mit ölgekühlten Kugellagern versehen war an die Verwendung eines gasstatischen Lagers. Daher wurden, um die nötige Lagerfläche zu schaffen, Hülsen 22 auf die Welle geschoben, die auf dem zwischen ihnen und der z. B. aus Sintermetall hergestellten Lagerschale 8 aufgebauten Luftpolster schwimmen. Durch zusätzliche Abstandshalter 23 werden die einzelnen Teile auf Position gehalten.

Interatom GmbH                    -6-
5060 Bergisch Gladbach 1


Abgasturbolader mit gasstatischem Lager


Patentansprüche


1. Abgasturbolader (4) für Verbrennungskraftmaschine (1) mit auf einer in gasstatischen Lagern (8) gelagerten Welle (7) gelagerter Turbine (5) und Kompressor (6), d a d u r c h   g e k e n n z e i c h n e t , daß die Schale des gasstatischen Lagers (8) aus einem porösen Material hergestellt ist, dessen Oberflächenschicht auf der Innenseite der Lagerschale verdichtet ist.


2. Abgasturbolader (4) nach Anspruch 1, d a d u r c h   g e k e n n z e i c h n e t , daß eine besondere, an die Lagerluftleitung (13) angeschlossene Hilfspumpe (17) mit unabhängiger Energieversorgung vorhanden ist.


3. Abgasturbolader (4) nach Anspruch 1, d a d u r c h   g e k e n n z e i c h n e t , daß in die Lagerluftleitung (13) ein Druckluftspeicher (16) eingebaut ist.


4. Abgasturbolader (4) nach Anspruch 1, d a d u r c h   g e k e n n z e i c h n e t , daß in die Lagerluftleitung (13) ein Staubfilter (14) eingebaut ist.


We/Bt 25.03.86

FIG1

FIG 2

0212091
Nummer der Anmeldung

Europäisches
Patentamt

**EUROPÄISCHER RECHERCHENBERICHT**

EP 86 10 7292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-A-3 230 232 (TITTIZER) <br> * Insgesamt * | 1 | F 16 C 32/06 <br> F 16 C 33/14 |
| Y | PATENTS ABSTRACTS OF JAPAN, Band 7, Nr. 137 (M-222)[1282], 15. Juni 1983; & JP-A-58 50 314 (KOGYO GIJUTSUIN) 24-03-1983 | 1 | |
| Y | DE-A-2 007 434 (NIMMO) <br> * Insgesamt * | 1 | |
| Y | US-A-3 445 148 (HARRIS) <br> * Anspruch 2 * | 1 | |
| Y | GB-A-2 108 595 (LECHNER) <br> * Seite 1, Zeilen 87-111; Seite 2, Zeilen 30-59; Figur 2 * | 1 | RECHERCHIERTE SACHGEBIETE (Int. Cl.4) |
| A | DE-B-1 167 119 (SPILLMANN) <br> * Insgesamt * | 1,2,4 | F 01 D <br> F 16 C <br> F 02 C |
| Y,D | PATENTS ABSTRACTS OF JAPAN, Band 8, Nr. 203 (M-326)[1640], 18. September 1984; & JP-A-59 93 925 (HITACHI SEISAKUSHO K.K.) 30-05-1984 | 1 | |
| A | Idem | 2 | |

Der vorliegende Recherchenbericht wurde für alle Patentansprüche erstellt.

| Recherchenort <br> DEN HAAG | Abschlußdatum der Recherche <br> 16-09-1986 | Prüfer <br> IVERUS D. |
|---|---|---|